# EUROPÄISCHE PATENTSCHRIFT

(11) **EP 0 922 518 B1**
(45) Veröffentlichungstag und Bekanntmachung des Hinweises auf die Patenterteilung: **29.08.2001**
(21) Anmeldenummer: 98122725.9
(22) Anmeldetag: 28.11.1998
(51) Int. Cl.: B23B 51/10

(54) **Anfaswerkzeug für rohrförmige Werkstücke**
Chamfering tool for tubular workpieces
Outil à chanfreiner pour pièces tubulaires

(30) Priorität: 13.12.1997 DE 19755514; 02.01.1998 DE 19800029
(43) Veröffentlichungstag der Anmeldung: 16.06.1999
(73) Patentinhaber: ROTHENBERGER Werkzeuge Aktiengesellschaft, 60327 Frankfurt (DE)
(72) Erfinder: Rothenberger, Bernd, 61476 Kronberg (DE); Fuhr, Jürgen, 65779 Kelkheim (DE); Weber, Thilo, 61184 Karben (DE)
(74) Vertreter: Zapfe, Hans, Dipl.-Ing.

(56) Entgegenhaltungen:
- EP-A- 0 113 276
- DE-U- 29 713 050

## Beschreibung

Die Erfindung betrifft ein Anfaswerkzeug für rohrförmige Werkstücke mit einem Antriebsschaft, einem Zentrierkörper und einem Fräskörper, auf dessen Umfang mindestens zwei Anfasschneiden angeordnet sind, von denen jede in bezug auf eine Rotationsachse einen solchen räumlichen Verlauf hat, daß das rohrförmige Werkstück gleichzeitig mit einer Innenfase, mit einer Außenfase und mit einer Stirnfläche versehbar ist, die in bezug auf die Rotationsachse eine Rotationsfläche bilden.

Derartige Werkzeuge werden häufig auch als Entgratungswerkzeuge bezeichnet. Da beim Erfindungsgegenstand aber die Ausbildung sauberer Fasen im Vordergrund steht und der Ausbildung einer Fase immer auch eine Entgratung vorausgeht, wird nachstehend ausschließlich der Ausdruck "Anfaswerkzeug" verwendet, ohne dadurch das Anwendungsgebiet einzuschränken.

Durch das DE 71 48 575 U ist ein Anfaswerkzeug bekannt, bei dem eine Anfasschneide mit drei Schneidkanten für eine Innenfase, eine Außenfase und eine Stirnfläche an einem Handhebel befestigt ist, der um einen in das Rohr eingebrachten Zentrierkörper drehbar ist. Wenn bei einem solchen Werkzeug der Handantrieb durch einen motorischen Antrieb ersetzt würde, besteht eine erhebliche Gefahr einer Verletzung der Bedienungsperson, zumal auch die Gefahr besteht, daß sich die vorspringende Klinge mit der Anfassschneide in Garderobenteilen verfängt.

Durch das DE 297 13 050 U1 ist ein Anfaswerkzeug der eingangs beschriebenen Gattung bekannt, das entweder manuell angetrieben oder stationär verwendet wird. Dabei ist die Schneideinrichtung zwar teilweise von einem Gehäuse umgeben, ragt jedoch aus diesem Gehäuse heraus, so daß ein ähnliches Gefahrenpotential besteht, zumal die vordere Gehäusekante stufenförmig ausgebildet ist. Weiterhin wird durch eben dieses Gehäuse, das jenseits der Anfasschneiden geschlossen ist, die Späneabfuhr behindert.

Ein anderes Anfaswerkzeug, das in einer Hülse untergebracht und mittels eines Einsatzkörpers in ein Bohrmaschinenfutter einsetzbar ist, ist durch das DE 296 08 602 U bekannt. In dieser Hülse befinden sich jeweils drei Gruppen von Anfasschneiden für eine Innen- und eine Außenanfasung. Um von einer Innenanfasung zu einer Außenanfasung übergehen zu können, muß der Bearbeitungsvorgang für die eine Fase beendet, die Hülse aus dem Einsatzkörper herausgezogen und zur Herstellung der jeweils anderen Fase in umgekehrter Richtung wieder in den Einsatzkörper eingesteckt werden, worauf ein zweiter Bearbeitungsvorgang folgt. Eine eventuell schräg zur Rohrachse verlaufende, durch einen Sägevorgang erzeugte Schnittfläche kann nicht begradigt, d.h., in eine Rotationsfläche zurückgeschnitten werden. Auch ist ein Verkürzen einer Rohrleitung durch längere Einwirkung des Werkzeugs nicht möglich.

Ein ganz wesentlicher Nachteil schräger Schnitt- bzw. Stirnflächen liegt darin, daß diese - trotz Anfasung - dazu neigen, etwaige Dichtungsringe von Rohrmuffen, in die ein Rohrende zum nachfolgenden Verpressen und zur Herstellung einer Rohrverbindung eingeschoben werden, durch die schräge Schnittfläche aus ihrer Ringnut in der Rohrmuffe "herausgekrempelt" werden, was von der Bedienungsperson nicht bemerkt wird und zu einer undichten Rohrverbindung führt.

Der Erfindung liegt daher die Aufgabe zugrunde, ein Anfaswerkzeug der eingangs genannten Gattung anzugeben, mit dem nicht nur durch einen einzigen Arbeitsgang eine Endbearbeitung eines Rohres mit gleichmäßig breiten Innen- und Außenfasen bei Beseitigung eventueller schräger Schnittflächen möglich ist, sondern bei dem auch jegliche Unfall- und Verletzungsgefahr ausgeschlossen ist, und im dem sich keine nennenswerten Mengen von Spänen ansammeln können.

Die Lösung der gestellten Aufgabe erfolgt bei dem eingangs beschriebenen Anfaswerkzeug erfindungsgemäß dadurch, daß der Fräskörper in einem Schutzkörper untergebracht ist, dessen Vorderkante bis mindestens zu dem Anfasschneiden vorgezogen ist, und daß der Schutzkörper gegenüber dem Fräskörper auf den Umfang der Anfasschneiden mindestens eine Spanaustrittöffnung freiläßt.

Mit dem Erfindungsgegenstand wird die gestellte Aufgabe in vollem Umfange gelöst, d.h. mit ihm ist nicht nur durch einen einzigen Arbeitsgang eine Endbearbeitung eines Rohres mit gleichmäßig breiten Innen- und Außenfasen bei Beseitigung eventueller schräger Schnittflächen möglich, sondern es ist auch jegliche Unfall- und Verletzungsgefahr ausgeschlossen, und im Anfaswerkzeug können sich auch keine nennenswerten Mengen von Spänen ansammeln. Die Vermeidung einer Späneansammlung hat den beonderen Vorteil, daß Rohre durch Zerspanung größerer Längenabschnitte auch "auf Maß" gebracht werden können, was im Heizungs- und Leitungsbau besonders wichtig ist, wenn bereits ein Teil der Rohrleitungen verlegt ist, und ein Leitungsabschnitt "eingepaßt" werden muß.

Es kann also mit dem Erfindungsgegenstand auch ein millimeter-genaues Verkürzen eines Rohres durchgeführt werden. Dies ist insbesondere dann von Vorteil, wenn sich das Ende eines schon teilweise verlegten Rohres in einer Ecke oder Mauernische befindet und nicht ohne weiteres mehr herausgenommen werden kann.

Es ist dabei besonders vorteilhaft, wenn im Zuge weiterer Ausgestaltungen der Erfindung - entweder einzeln oder in Kombination -:
* den Anfasschneiden in Drehrichtung innerhalb des Fräskörpers Hohlräume vorgelagert sind, in deren einer Wandfläche jeweils die Schneidkanten der zugehörigen Anfasschneide liegen, und wenn eine weitere Wandfläche bogenförmig bis zum Außenumfang des Fräskörpers und bis zu der zugehörigen Spanaustrittsöffnung verläuft,
* der Schutzkörper sich über mindestens einen Teil der Länge des Zentrierkörpers erstreckt,
* der Schutzkörper aus einem zylindrischen Mantelteil und aus einem radial einwärts gerichteten Flanschteil besteht, die durch Stege miteinander verbunden sind, zwischen denen sich die Spanaustrittsöffnungen befinden,
* die Stege sich auf der Außen- und der Innenseite des Mantelteils fortsetzen,
* der Antriebsschaft durch eine öffnung im Flanschteil hindurchgeführt ist,
* der Schutzkörper aus einem Kunststoff besteht,
* der Antriebsschaft einen koaxialen Gewindefortsatz aufweist, der sich durch den Flanschteil und durch den Fräskörper hindurch erstreckt und auf den der Zentrierkörper aisgeschaubt ist,
* das Anfaswerkzeug einen Handgriff mit einer Wechselfassung aufweist, die aus einem Grundkörper mit einer Ausnehmung und einer Rastvorrichtung für den Antriebsschaft besteht,
* die Rastvorrichtung aus einer im Grundkörper radial beweglichen Kugel oder aus einem im Grundkörper radial beweglichen geteilten Federring und einer zum Grundkörper koaxialen, federbelasteten Schiebehülse mit einer Stufenbohrung mit einer Schulterfläche besteht, durch die die Kugel oder der geteilte Federring aus einer Freigabestellung formschlüssig in eine Ausnehmung im Antriebsschaft des Fräskörpers einschiebbar ist,
* die Schiebehülse bei einer Auflage einer Hand-Innenfläche auf dem Handgriff zum Zwecke einer Rückzugsbewegung gegen die Kraft einer vorgespannten Druckfeder mit Daumen und Zeigefinger erfaßbar ist,
* die Anfasschneiden an je einer Schneidplatte angeordnet sind, die auswechselbar und/oder verstellbar in einer Ausnehmung im Fräskörper gelagert ist,
* mehrere, unterschiedlich große Anfaswerkzeuge mit einem Mehrfachhalter verbunden sind, der eine Antriebsvorrichtung für jedes der Anfaswerkzeuge aufweist,
* mehrere Anfaswerkzeuge mit untereinander paralleler Lage der Rotationsachsen in dem Mehrfachhalter gelagert sind.

Der vorgelagerte Zentrierkörper hat dabei eine zusätzliche Funktion, nämlich die einer Kalibrierung des Rohrendes. Besonders dünnwandige Rohre und/oder solche, die innen und außen mit einem Kunststoffüberzug versehen sind, neigen zur Unrundheit, sei es durch die Herstellung, den Transport oder die Lagerung der Rohre. Der Zentrierkörper erzwingt, insbesondere wenn er maßhaltig ist, die Entstehung einer exakten Hohlzylinderform, was gleichfalls die Herstellung einer dichten Rohrverbindung fördert. Der Zentrierkörper kann auch durch einen - an sich bekannten - Expanderkörper ersetzt werden, um den Durchmesser des Rohrendes aufzuweiten.

Ausführungsbeispiele des Erfindungsgegenstandes und weitere Ausgestaltungen werden nachstehend anhand der Figuren 1 bis 8 näher erläutert.

Es zeigen:
- Figur 1: eine radiale Ansicht eines ersten Ausführungsbeispiels eines Anfaswerkzeugs mit einem Schnitt durch ein bereits bearbeitetes Rohrende,
- Figur 2: eine stirnseitige Draufsicht auf den Fräskörpers von Figur 1 in Richtung der Pfeile II in Figur 3 in vergrößertem Maßstab,
- Figur 3: einen vergrößerten Ausschnitt des Bereichs "B" in Figur 1 in Verbindung mit einem teilweisen Schnitt entlang der Linie III-III in vergrößertem Maßstab und als Prinzipdarstellung,
- Figur 4: den Gegenstand von Figur 1 in Verbindung mit einer als Handgriff mit Wechselfassung ausgebildeten Antriebsvorrichtung,
- Figur 5: einen Axialschnitt durch ein zweites Ausführungsbeispiel des Erfindungsgegenstandes mit einem verlängerten Schutzkörper,
- Figur 6: eine stirnseitige Ansicht des Gegenstandes von Figur 5,
- Figur 7: eine Explosionsdarstellung des Gegenstandes von Figur 5, und
- Figur 8: eine als Mehrfachhalter ausgebildete Antriebsvorrichtung mit unterschiedlich großen Anfaswerkzeugen.

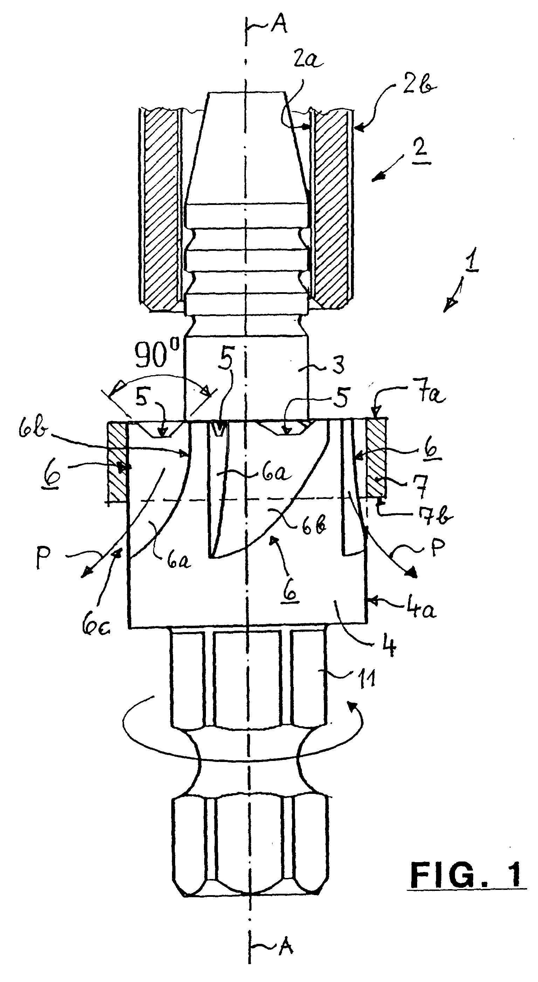

Figur 1 zeigt ein Anfaswerkzeug 1 mit dem etwas zurückgezogenen Ende eines rohrförmigen Werkstücks 2, das im vorliegenden Fall ein Installationsrohr ist, das mit einer Innenbeschichtung 2a und einer Außenbeschichtung 2b, beide aus Kunststoff, versehen ist. Die Rotationsachse "A-A" des Anfaswerkzeugs 1 stimmt durch die Wirkung eines Zentrierkörpers 3 mit der Rohrachse überein.

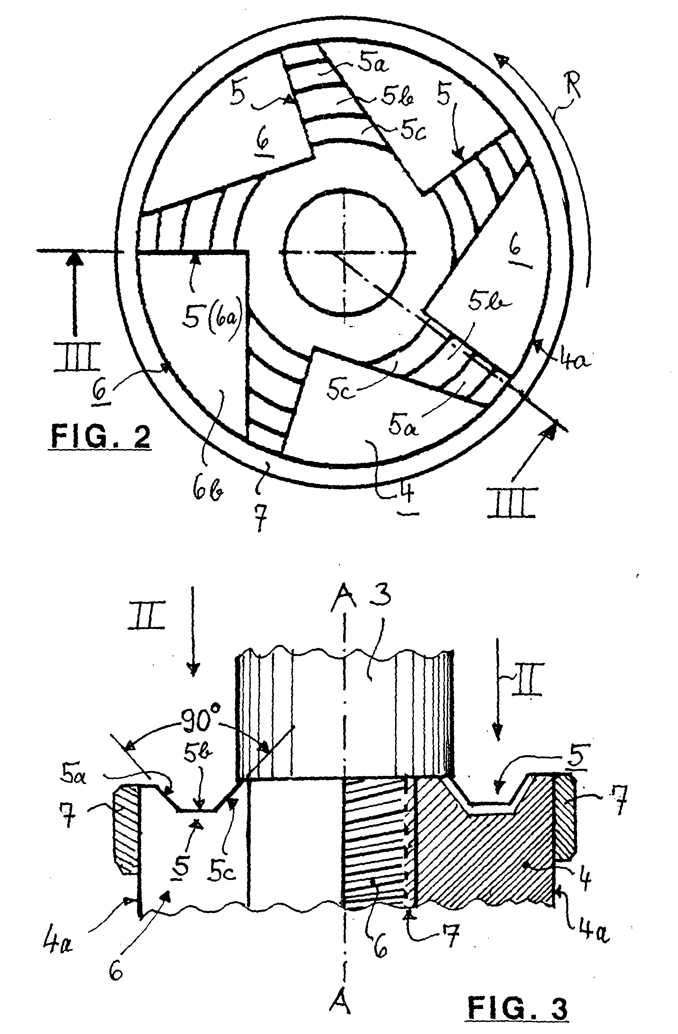

Das Anfaswerkzeug 1 besitzt einen beispielsweise aus Werkzeugstahl bestehenden Fräskörper 4, der von einer zylindrischen Hüllfläche 4a umgeben ist und auf dessen Umfang in äquidistanter Verteilung fünf durch Spanabheben hergestellte Anfasschneiden 5 vorgesehen sind (Figuren 2 und 3). Die Anfasschneiden 5 liegen in jeweils einer Ebene, die im wesentlichen radial zur Rotationsachse A-A ausgerichtet ist und in der die Rotationsachse liegt (Figur 2). Die Form der Anfasschneiden 5 wird anhand von Figur 3 noch näher erläutert.

Den Anfasschneiden 5 sind - Drehrichtung - innerhalb des Fräskörpers 4 Hohlräume 6 vorgelagert, in deren einer Wandfläche 6a jeweils die Schneidkanten der zugehörigen Anfasschneiden 5 liegen. Eine weitere Wandfläche 6b, die durch Spanabheben erzeugt wurde, verläuft bogenförmig bis zum Außenumfang des Fräskörpers 4, bzw. bis zu dessen Hüllfläche 4a. Dadurch dienen die Wandflächen 6b zur Späneführung aus dem Fräskörper heraus (Pfeile P).

Der Fräskörper 4 ist im Bereich seiner Anfasschneiden 5 von einem ringförmigen Schutzkörper 7 umgeben, der einen äußerst wirksamen Schutz gegen Verletzungen darstellt, die dadurch entstehen können, daß der Außenumfang des Fräskörpers einen zackigen Verlauf hat. Der Schutzkörper 7 besitzt eine auf das Werkstück 2 zu gerichtete ringförmige Vorderkante 7a, die sich in axialer Richtung bis mindestens über alle Anfasschneiden 5 erstreckt, und eine entgegengesetzte ringförmige Hinterkante 7b, die gegenüber den Hohlräumen je eine Spanaustrittsöffnung 6c freiläßt. Die Späneabfuhr wird durch den Schutzkörper 7 nicht behindert, da dessen axiale Länge geringer ist als die axiale Erstreckung der Hohlräume 6 (siehe die Pfeile P in Figur 1).

Der Zentrierkörper 3 ist als Rotationskörper ausgebildet und den Anfasschneiden 5 ist in Arbeitsrichtung konzentrisch zur Rotationsachse A-A vorgelagert.

Wie insbesondere aus Figur 3 hervorgeht, hat jede Anfasschneide 5 einen solchen räumlichen Verlauf, daß das rohrförmige Werkstück 2 (Figur 1) durch die Rotation In Richtung des Pfeils "R" in Figur 2 gleichzeitig mit einer Innenfase 8, mit einer Außenfase 9 und mit einer dazwischenliegenden, senkrecht zur Rohrachse ausgerichteten, Kreisringfläche 10 versehen wird (Figur 1). Dies geschieht dadurch, daß jede Anfasschneide 5 drei Schneidenabschnitte 5a, 5b und 5c aufweist, von denen der radial äußere 5a zur Herstellung der Außenfase 9, der radial innere 5c zur Herstellung der Innenfase 8 und der mittlere Schneidenabschnitt 5b zur Herstellung der radialen Kreisringfläche 10 dient. Die Schneidenabschnitte 5a und 5c stehen unter je einem Winkel von 45° zur Achse A-A, d.h. ihr öffnungwinkel beträgt 90°. Dies ist jedoch nicht zwingend, vielmehr können die Schneidenabschnitte auch asymmetrisch ausgerichtet sein.Die Schneidenabschnitte 5a, 5b und 5c können auch zu einer bogenförmigen, beispielsweise halbkreisförmigen, Anfasschneide 5 zusammengefaßt werden.

Es ist dabei wichtig, daß der maximale Durchmesser des Zentrierkörpers 3 unter Beachtung der erforderliche Toleranzen möglichst genau dem Innendurchmesser des Rohres 2 entspricht, um ein Rattern und/oder ein Schiefstellen zu vermeiden.

Durch die ebenen und radialen Wandflächen 6a der Hohlräume 6 werden im übrigen auch die radialen und gleichzeitig achsparallelen Ebenen definiert, in denen die Anfasschneiden 5 liegen, die im übrigen auf ihrer Rückseite die üblichen Freischnitte (Abschrägungen) aufweisen.

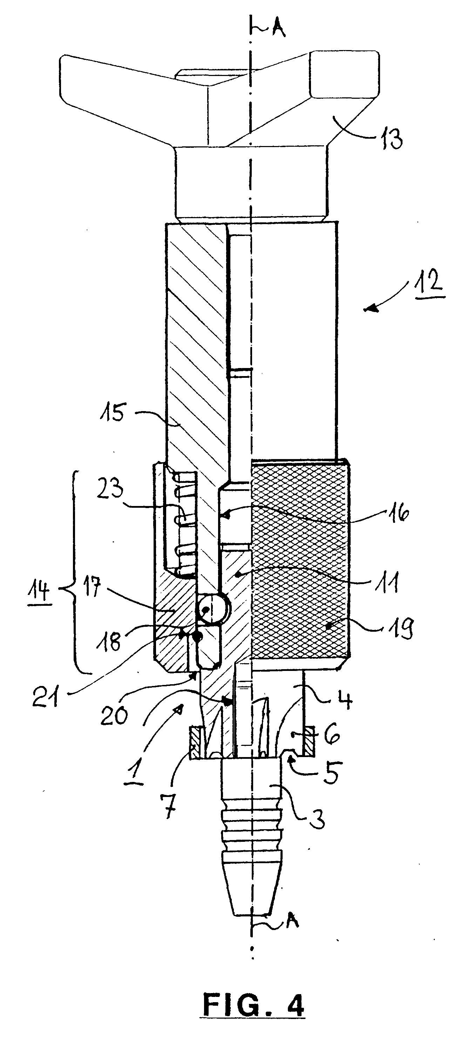

Wie aus den Figuren 1 und 4 hervorgeht, besitzt der Fräskörper 4 auf seiner den Anfasschneiden 5 gegenüberliegenden Seite einen koaxialen Antriebsschaft 11 mit einem Mehrkantquerschnitt zum verdrehfesten, aber axial lösbaren, Einsetzen in eine Antriebsvorrichtung. Als Antriebsvorrichtung kann in einfachster Weise eine Handbohrmaschine mit einem Bohrfutter verwendet werden, in die das Anfaswerkzeug nach Figur 1 eingespannt wird.

Gemäß Figur 4 besteht eine Antriebsvorrichtung 12 für den manuellen Betrieb aus einem Handgriff 13, der grob gesehen die Form eines dreizackigen Sterns besitzt, und aus einer Wechselfassung 14 für den Antriebsschaft 11. Die Wechselfassung 14 besteht wiederum aus einem Grundkörper 15 mit einer Ausnehmung 16 und einer Rastvorrichtung 17 für den Antriebsschaft 11 des Fräskörpers 4. Die Rastvorrichtung 17 besteht ihrerseits aus einer im Grundkörper 15 radial beweglichen Kugel 18 und aus einer zum Grundkörper 15 koaxialen, federbelasteten Schiebehülse 19 mit einer Stufenbohrung 20, die eine Schulterfläche 21 besitzt, durch die die Kugel 18 aus einer Freigabestellung formschlüssig in eine als Ringnut ausgebildete Ausnehmung 22 im Antriebsschaft 11 des Fräskörpers 4 einschiebbar ist. Zur Erzielung einer Unverlierbarkeit besitzt der Antriebsschaft 11 eine Ringnut, in die ein Federring eingelegt ist, auf der sich die Schulterfläche abstützen kann, wie in Figur 4 dargestellt. Auch kann an die Stelle der Rastkugel 18 ein geteilter Federring treten.

Aus Figur 4 ist ferner ersichtlich, daß die Schiebehülse 19 bei einer Auflage einer Handinnenfläche auf dem Handgriff 13 zum Zwecke einer Rückzugsbewegung gegen die Kraft einer vorgespannte Druckfeder 23 mit Daumen und Zeigefinger erfaßt werden kann. Dies fördert die Bedienungsfreundlichkeit erheblich.

Anstatt die Anfasschneiden 5 durch Schleifen einstückig mit dem Fräskörper auszubilden, ist es auch möglich, die mindestens eine Anfasschneide 5 an einer Schneidplatte anzuordnen, die auswechselbar und/oder verstellbar in einer Ausnehmung im Fräskörper 4 gelagert ist.

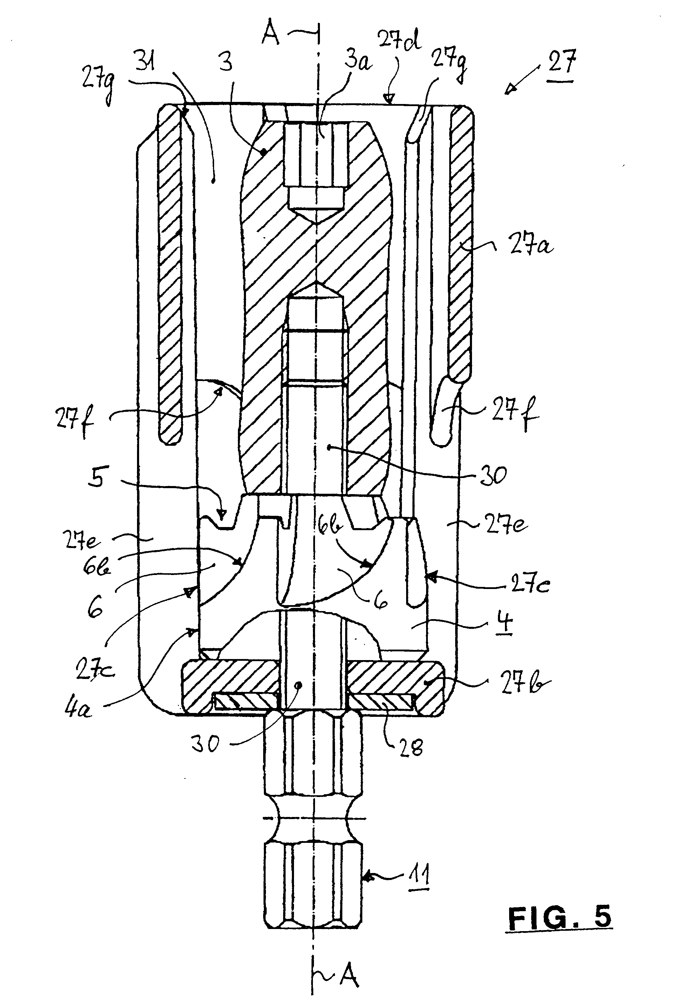

Bei dem Ausführungsbeispiel nach Figur 5 ist ein wesentlich verlängerter Schutzkörper 27 aus einem Kunststoff mit guten Gleiteigenschaften vorhanden, der aus einem zylindrischen Mantelteil 27a und aus einem radial einwärts gerichten Flanschteil 27b besteht. Beide Teile sind durch einen Kranz achsparalleler Stege 27e miteinander verbunden, die den Fräskörper 4 konzentrisch zwischen sich einschließen. Der Antriebsschaft 11 ist durch eine konzentrische Öffnung im Flanschteil 27b hindurchgeführt.

Die Vorderkante 27d des Mantelteils 27a ist nicht nur bis über die Anfasschneiden 5 sondern auch bis über den Zentrierkörper 3 vorgezogen. Das Mantelteil 27a umgibt den Zentrierkörper 3 und versteift auch die Stege 27e, die sowohl auf der Außen- als auch auf der Innenseite des Mantelteils 27a bis nahezu zu dessen Vorderkante 27d weiterlaufen.

Im Bereich der Hohlräume 6 sind zwischen den Stegen 27e Spanaustrittsöffnungen 27c großen Querschnitts vorgesehen, und zwar so, daß der Mantelteil 27a die Spanaustrittsöffnungen 27c nicht überdeckt und/oder mit den bogenförmigen Wandflächen 6b der Hohlräume 6 Stufen bildet. Die Vorderkante 27d des Schutzkörpers 27 ist eine Rotationsfläche und gut abgerundet, um ein "Einfädeln" des Werkstücks zu erleichtern, wobei auch die inneren Enden der Stege 27e entsprechende "Auflaufschrägen" 27g besitzen. Die Spanaustrittsöffnungen 27c dienen aber in ganz besonders vorteilhafter Weise auch zur visuellen Beobachtung des Zerspanungsvorgangs, d.h. es kann - ohne Abnehmen des Werkzeugs und sogar bei dessen Rotation - festgestellt werden, ob der Anfas- oder Ablängvorgang den vorgegebenen Bedingungen entspricht. Auch wird die Sicht nicht durch angesammelte Späne behindert.

Der Zentrierkörper 3 ist in der Mitte taillenförmig verjüngt, um die Reibung zu verringern, und mittels eines Gewindefortsatzes 30 auswechselbar mit dem Antriebsschaft 11 verschraubt. Die drehfeste Verschraubung geschicht durch ein Innensechskant 3a. Es ist zu erkennen, daß zwischen dem Zentrierkörper 3 und dem Mantelteil 27a bzw. den Stegen 27e ein Spalt 31 gebildet wird. Dieser kann jedoch sehr weit gehalten werden, um z.B. mit einem Schutzköper 27 mehrere Durchmesserbereiche von Rohren abdecken zu können. In jedem Falle ist eine Berührung mit scharfen Kanten des Werkzeugs auch durch die Stege 27e verhindert.

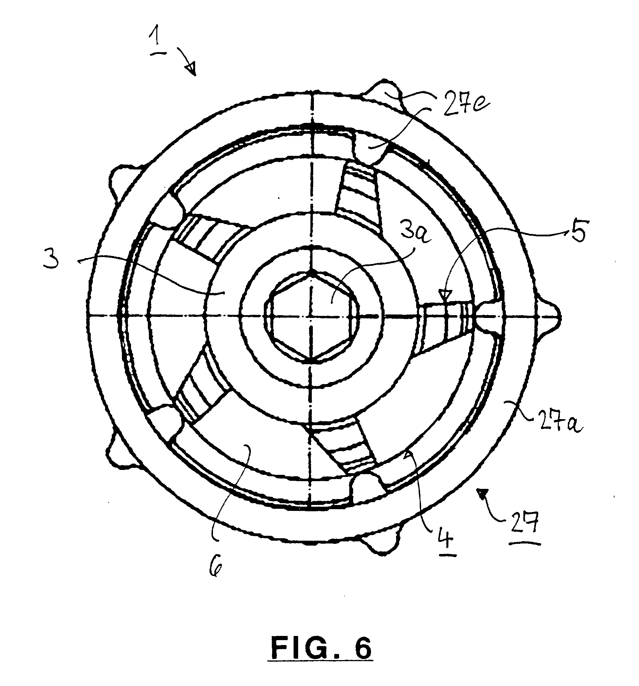

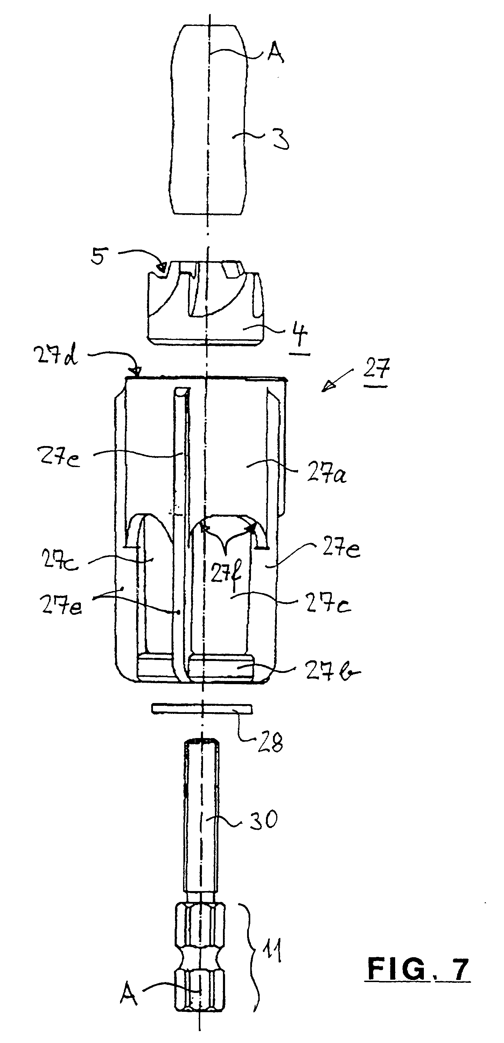

Figur 6 zeigt in Analogie zu Figur 2 die Vorderansicht des Anfaswerkzeugs, insbesondere aber auch den restlichen Verlauf der Stege 27e beiderseits des Mantelteils 27a. Aus der Explosionsdarstellung nach Figur 7 gehen auch der einfache Aufbau und die Montage des Anfaswerkzeugs hervor: Der Antriebsschaft 11 mit dem Gewindezapfen 30 wird durch eine Unterlegscheibe 28 und den Flanschteil 27b des Schutzkörpers 27 bis in den Raum zwischen den Stegen 27e hindurchgesteckt. Alsdann wird der Fräskörper 4 auf den Gewindezapfen aufgefädelt und mittels des Zentrierkörpers 3 verdrehfest angezogen. Besonders gut zu erkennen ist der korbähnliche Aufbau des einteiligen Schutzkörpers 27. Dabei sind die Stege 27e an ihren Außenseiten gut abgerundet, so daß Verletzungen und das Verfangen von Garderobenteilen nicht möglich sind. An den übergangsstellen 27f der Stege 27e in den Mantelteil 27a sind die Spanaustrittsöffnungen 27c torbogenförmig abgerundet, um Spannungsspitzen zu vermeiden.

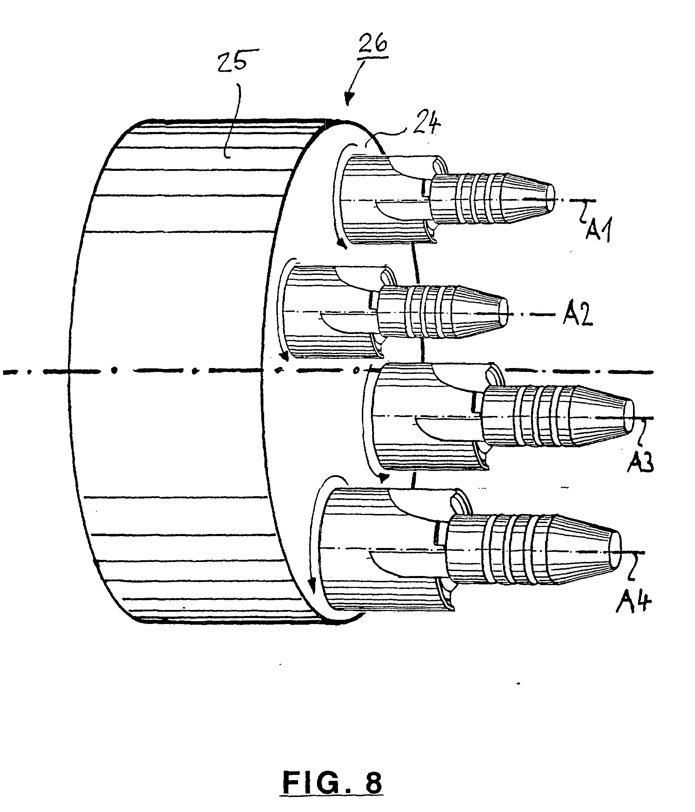

Anhand von Figur 8 ist noch dargestellt, daß mehrere, unterschiedlich große Anfaswerkzeuge nach Figur 1 (oder nach den Figuren 5 bis 7) in eine Antriebsvorrichtung 26 eingesetzt werden können, die einen Mehrfachhalter 24 besitzt. Der Einfachheit halber sind die Schutzkörper 7 bzw. 27 hier nicht dargestellt, aber vorhanden. Durch gleichzeitigen Antrieb aller Anfaswerkzeuge um jeweils eine eigene Achse A1, A2, A3 und A4 kann eine Bedienungsperson in kurzer Taktfolge Rohre mit den unterschiedlichsten Durchmessern entgraten und anfasen. Das erforderliche Getriebe, beispielsweise ein Planetengetriebe, ist in einem Gehäuse 25 untergebracht.

### Bezugszeichenliste:

- 1: Anfaswerkzeug
- 2: Werkstück
- 2a: Innenbeschichtung
- 2b: Außenbeschichtung
- 3: Zentrierkörper
- 3a: Innensechskant
- 4: Fräskörper
- 4a: Hüllfläche
- 5: Anfasschneiden
- 5a: Schneidenabschnitt
- 5b: Schneidenabschnitt
- 5c: Schneidenabschnitt
- 6: Hohlräume
- 6a: Wand fläche
- 6b: Wandfläche
- 6c: Spanautrittsöffnung
- 7: Schutzkörper
- 7a: Vorderkante
- 7b: Hinterkante
- 8: Innenfase
- 9: Außenfase
- 10: Kreisringfläche
- 11: Antriebsschaft
- 12: Antriebsvorrichtung
- 13: Handgriff
- 14: Wechselfassung
- 15: Grundkörper
- 16: Ausnehmung
- 17: Rastvorrichtung
- 18: Rastelement (Kugel, Ringfeder)
- 19: Schiebehülse
- 20: Stufenbohrung
- 21: Schulterfläche
- 22: Ausnehmung
- 23: Druckfeder
- 24: Mehrfachhalter
- 25: Gehäuse
- 26: Antriebsvorrichtung.
- 27: Schutzkörper
- 27a: Mantelteil
- 27b: Flanschteil
- 27c: Spanaustrittsöffnung
- 27d: Vorderkante
- 27e: Stege
- 27f: übergangsstellen
- 27g: Auflaufschrägen
- 28: Uterlegscheibe
- 30: Gewindezapfen
- 31: Spalt.

## Patentansprüche

1. Anfaswerkzeug für rohrförmige Werkstücke (2) mit einem Antriebsschaft (11), einem Zentrierkörper (3) und einem Fräskörper (4), auf dessen Umfang mindestens zwei Anfasschneiden (5) angeordnet sind, von denen jede in bezug auf eine Rotationsachse (A-A) einen solchen räumlichen Verlauf hat, daß das rohrförmige Werkstück (2) gleichzeitig mit einer Innenfase (8), mit einer Außenfase (9) und mit einer Stirnfläche (10) versehbar ist, die in bezug auf die Rotationsachse (A-A) eine gemeinsame Rotationsfläche bilden, **dadurch gekennzeichnet**, daß der Fräskörper (4) in einem Schutzkörper (7, 27) untergebracht ist, dessen Vorderkante (7a, 27d) bis mindestens zu den Anfasschneiden (5) vorgezogen ist, und daß der Schutzkörper (7, 27) gegenüber dem Fräskörper (4) auf dem Umfang der Anfasschneiden (5) mindestens eine Spanaustrittsöffnung (6c, 27c) freiläßt.

2. Anfaswerkzeug nach Anspruch 1, **dadurch gekennzeichnet,** daß den Anfasschneiden (5) in Drehrichtung innerhalb des Fräskörpers (4) Hohlräume (6) vorgelagert sind, in deren einer Wandfläche (6a) jeweils die Schneidkanten der zugehörigen Anfasschneide (5) liegen, und daß eine weitere Wandfläche (6b) bogenförmig bis zum Außenumfang des Fräskörpers (4) und bis zu der zugehörigen Spanaustrittsöffnung (6c, 27c) verläuft.

3. Anfaswerkzeug nach Anspruch 1, **dadurch gekennzeichnet,** daß der Schutzkörper (7, 27) sich über mindestens einen Teil der Länge des Zentrierkörpers (3) erstreckt.

4. Anfaswerkzeug nach Anspruch 3, **dadurch gekennzeichnet,** daß der Schutzkörper (27) aus einem zylindrischen Mantelteil (27a) und aus einem radial einwärts gerichteten Flanschteil (27b) besteht, die durch Stege (27e) miteinander verbunden sind, zwischen denen sich die Spanaustrittsöffnungen (27c) befinden, und daß der Flanschteil (27b) den Fräskörper (4) hintergreift.

5. Anfaswerkzeug nach Anspruch 4, **dadurch gekennzeichnet,** daß die Stege (27e) sich auf der Außen- und der Innenseite des Mantelteils (27a) fortsetzen.

6. Anfaswerkzeug nach Anspruch 4, **dadurch gekennzeichnet,** daß der Antriebsschaft (11) durch eine öffnung im Flanschteil (27b) hindurchgeführt ist.

7. Anfaswerkzeug nach Anspruch 4, **dadurch gekennzeichnet,** daß der Schutzkörper (27) aus einem Kunststoff besteht.

8. Anfaswerkzeug nach Anspruch 4, **dadurch gekennzeichnet,** daß der Antriebsschaft (11) einen koaxialen Gewindezapfen (30) aufweist, der sich durch den Flanschteil (27b) und durch den Fräskörper (4) hindurch erstreckt und auf den der Zentrierkörper (3) aufgeschraubt ist.

9. Anfaswerkzeug nach Anspruch 4, **gekennzeichnet durch** einen Handgriff (13) mit einer Wechselfassung (14), die aus einem Grundkörper (15) mit einer Ausnehmung (16) und einer Rastvorrichtung (17) für den Antriebsschaft (11) besteht.

10. Anfaswerkzeug nach Anspruch 9, **dadurch gekennzeichnet,** daß die Rastvorrichtung (17) aus einer im Grundkörper (15) radial beweglichen Kugel (18) oder aus einem im Gründkorper (15) radial beweglich geteilten Federring und einer zum Grundkörper (15) koaxialen, federbelasteten Schiebehülse (19) mit einer Stufenbohrung (20) mit einer Schulterfläche (21) besteht, durch die die Kugel (18) oder der geteilte Federring aus einer Freigabestellung formschlüssig in eine Ausnehmung (22) im Antriebsschaft (11) des Fräskörpers (4) einschiebbar ist.

11. Anfaswerkzeug nach Anspruch 10, **dadurch gekennzeichnet,** daß die Schiebehülse (19) bei einer Auflage einer Hand-Innenfläche auf dem Handgriff (13) zum Zwecke einer Rückzugsbewegung gegen die Kraft einer vorgespannte Druckfeder (23) mit Daumen und Zeigefinger erfaßbar ist.

12. Anfaswerkzeug nach Anspruch 1, **dadurch gekennzeichnet,** daß die Anfasschneiden (5) an je einer Schneidplatte angeordnet sind, die auswechselbar und/oder verstellbar in einer Ausnehmung im Fräskörper (4) gelagert ist.

13. Mehrfachanfaswerkzeug, welches mehrere, unterschiedlich große Anfaswerkzeuge (1) gemäß Anspruch 1 aufweist, die mit einem Mehrfachhalter (24) verbunden sind, der eine Antriebsvorrichtung (26) für jedes der Anfaswerkzeuge (1) aufweist.

14. Mehrfachanfaswerkzeug nach Anspruch 13, **dadurch gekennzeichnet,** daß mehrere Anfaswerkzeuge (1) mit untereinander paralleler Lage der Rotationsachsen in dem Mehrfachhalter (24) gelagert sind.

## Claims

1. Chamfering tool for tubular workpieces (2) with a driveshaft (11), a centring body (3) and a milling body (4) onto the circumference of which are arranged at least two chamfering cutters (5) of which each extends spatially relative to a rotary axis (A-A) in such a manner that the tubular workpiece (2) can be provided simultaneously with an inner chamfer (8), an outer chamfer (9) and with an end surface (10) which form a common rotary surface relative to the rotary axis (A-A), **characterised in that** the milling body (4) is accommodated in a protective body (7, 27) the front edge (7a, 27d) of which is advanced at least up to the chamfering cutters (5), and the protective body (7, 27) leaves clear at least one chip outlet opening (6c, 27c) opposite the milling body (4) on the circumference of the chamfering cutters (5).

2. Chamfering tool according to Claim 1, **characterised in that** ahead of the chamfering cutters (5), as seen in the rotary direction, and within the milling body (4) are placed cavities (6), having in its one wall surface (6a) respectively the cutting edges of the associated chamfering cutter (5), and a further wall surface (6b) extends arclike up to the outside circumference of the milling body (4) and up to the associated chip outlet opening (6c, 27c).

3. Chamfering tool according to Claim 1, **characterised in that** the protective body (7, 27) extends over at least a portion of the length of the centring body (3).

4. Chamfering tool according to Claim 3, **characterised in that** the protective body (27) is composed of a cylindrical casing part (27a) and a radially inward oriented flange part (27b) which are joined together by webs (27c), having between each other the chip outlet openings (27c), and the flange part (27b) reaches behind the milling body (4).

5. Chamfering tool according to Claim 4, **characterised in that** the webs (27e) continue on the outside and the inside of the casing part (27a).

6. Chamfering tool according to Claim 4, **characterised in that** the driveshaft (11) is passed through an opening in the flange part (27b).

7. Chamfering tool according to Claim 4, **characterised in that** the protective body (27) is made of a plastic material.

8. Chamfering tool according to Claim 4, **characterised in that** the driveshaft (11) comprises a coaxial threaded pin (30) which extends through the flange part (27b) and through the milling body (4) and onto which is screwed the centring body (3).

9. Chamfering tool according to Claim 4, **characterised by** a handle (13) with a change-over device (14) which is composed of a base body (15) with a cutout (16) and a detent device (17) for the driveshaft (11).

10. Chamfering tool according to Claim 9, **characterised in that** the detent device (17) comprises a ball (18) which is radially movable in the base body (15) or a split spring washer which is radially movable in the base body (15) and a springloaded sliding sleeve (19), which is coaxial relative to the base body (15) and provided with a stepped bore (20) with a shoulder surface (21) through which the ball (18) or the split spring washer are positively insertible from a release position into a cutout (22) in the driveshaft (11) of the milling body (4).

11. Chamfering tool according to Claim 10, **characterised in that** by placing the palm of the hand on the handle (13) the sliding sleeve (19) can be grabbed by thumb and index finger for the purpose of a retracting move against the load of a pretensioned pressure spring (23).

12. Chamfering tool according to Claim 1, **characterised in that** the chamfering cutters (5) are mounted on a respective cutting plate which is exchangeable and/or adjustable in a cutout in the milling body (4).

13. Multiple chamfering tool comprising a plurality of chamfering tools (1) of different sizes according to Claim (1) which are connected to a multiple holder (24) which comprises a drive (26) for each of the chamfering tools (1).

14. Multiple chamfering tool according to Claim 13, **characterised in that** a plurality of chamfering tools (1) is mounted in the multiple holder (24) with parallel positioning of the rotary axes.

## Revendications

1. Outil à chanfreiner pour des pièces à oeuvrer tubulaires (2), comportant une tige d'entraînement (1), un corps de centrage (3) et un corps de fraisage (4) à la périphérie duquel sont disposés au moins deux tranchants à chanfreiner (5) dont chacun présente un tel tracé dans l'espace par rapport à un axe de rotation (A-A), que la pièce à oeuvrer tubulaire (2) peut être pourvue à la fois d'un chanfrein intérieur (8), d'un chanfrein extérieur (9), et d'une surface frontale (10), qui forment une surface de révolution par rapport à l'axe de rotation (A-A), **caractérisé en ce que** le corps de fraisage (4) est logé dans un corps protecteur (7, 27) dont l'arête avant (7a, 27d) est avancée au moins jusqu'aux tranchants à chanfreiner (5), et en ce que le corps protecteur (7, 27) dégage au moins une ouverture de sortie de copeaux (6c, 27c) par rapport au corps de fraisage (4) sur la périphérie des tranchants à chanfreiner (5).

2. Outil à chanfreiner selon la revendication 1, **caractérisé en ce que** des creux (6) sont prévus en avant des tranchants à chanfreiner (5) en direction de rotation à l'intérieur du corps de fraisage (4), de telle sorte que les arêtes coupantes du tranchant à chanfreiner associé (5) se trouvent dans l'une des surfaces de paroi (6a) desdits creux (6), et en ce qu'une autre surface de paroi (6b) s'étend en forme d'arc jusqu'à la périphérie extérieure du corps de fraisage (4) et jusqu'à l'ouverture de sortie de copeaux associée (6c, 27c).

3. Outil à chanfreiner selon la revendication 1, **caractérisé en ce que** le corps protecteur (7, 27) s'étend sur une partie au moins de la longueur du corps de centrage (3).

4. Outil à chanfreiner selon la revendication 3, **caractérisé en ce que** le corps protecteur (27) est constitué par une partie enveloppe cylindrique (27a) et par une partie formant bride (27b) dirigée radialement vers l'intérieur, qui sont reliées l'une à l'autre par des barrettes (27e) entre lesquelles se trouvent les ouvertures de sortie de copeaux (27c), et en ce que la partie formant bride (27b) engage par l'amère le corps de fraisage (4).

5. Outil à chanfreiner selon la revendication 4, **caractérisé en ce que** les barrettes (27e) se prolongent sur la face extérieure et intérieure de la partie enveloppe (27a).

6. Outil à chanfreiner selon la revendication 4, **caractérisé en ce que** la tige d'entraînement (11) est menée à travers une ouverture dans la partie formant bride (27b).

7. Outil à chanfreiner selon la revendication 4, **caractérisé en ce que** le corps protecteur (27) est constitué en matière plastique.

8. Outil à chanfreiner selon la revendication 4, **caractérisé en ce que** la tige d'entraînement (11) comprend un tourillon fileté coaxial (30) qui traverse la partie formant bride (27b) et le corps de fraisage (4) et sur lequel est vissé sur le corps de centrage (3).

9. Outil à chanfreiner selon la revendication 4, **caractérisé** par une poignée (13) comportant une monture interchangeable (14) qui est constituée par un corps de base (15) présentant un évidement (16) et par un dispositif d'enclenchement (17) pour la tige d'entraînement (11).

10. Outil à chanfreiner selon la revendication 9, **caractérisé en ce que** le dispositif d'enclenchement (17) est constitué par une bille (18) radialement mobile dans le corps de base (15) ou par une rondelle-ressort fendue radialement mobile dans le corps de base (15) et par une douille coulissante (19) coaxiale au corps de base (15) et chargée par un ressort présentant un perçage en gradins (20) avec une surface d'épaulement (21), au moyen desquelles la bille (18) ou la rondelle-ressort fendue peut être déplacée à partir d'une position de dégagement en coopération de formes jusque dans un évidement (22) dans la tige d'entraînement (11) du corps de fraisage (4).

11. Outil à chanfreiner selon la revendication 10, **caractérisé en ce que** lors de l'application de la paume d'une main sur la poignée (13), la douille coulissante (19) peut être saisie par le pouce et l'index dans le but d'un mouvement en retour à rencontre de la force d'un ressort de compression précontraint (23).

12. Outil à chanfreiner selon la revendication 1, **caractérisé en ce que** les tranchants à chanfreiner (5) sont agencés sur une plaque de coupe respective qui est montée interchangeable et/ou réglable dans un évidement dans le corps de fraisage (4).

13. Outil à chanfreiner multiple qui comprend plusieurs outils à chanfreiner (1) de tailles différentes selon la revendication 1, qui sont reliés à un support multiple (24) qui comprend un dispositif d'entraînement (26) pour chacun des outils à chanfreiner (1).

14. Outil à chanfreiner multiple selon la revendication 13, **caractérisé en ce que** plusieurs outils à chanfreiner (1) sont montés dans le support multiple (24) dans une situation dans laquelle les axes de rotation sont parallèles les uns aux autres.
